# EUROPEAN PATENT SPECIFICATION

(11) **EP 2 725 769 B1**
(45) Date of publication and mention of the grant of the patent: **22.08.2018**
(21) Application number: 12190114.4
(22) Date of filing: 26.10.2012
(51) Int. Cl.: H04M 1/725, G06F 1/30

(54) **Power module with wireless management function and wireless communication device using the same**
Leistungsmodul mit drahtloser Verwaltungsfunktion und drahtlose Kommunikationsvorrichtung damit
Module de puissance à fonction de gestion sans fil et dispositif de communication sans fil l'utilisant

(43) Date of publication of application: 30.04.2014
(73) Proprietor: Sercomm Corporation, Taipei 115 (TW)
(72) Inventor: Lefand, Guillaume, 92150 Suresnes (FR)
(74) Representative: dompatent von Kreisler Selting Werner - Partnerschaft von Patent- und Rechtsanwälten mbB

(56) References cited:
- WO-A1-02/073769
- WO-A2-2005/011313
- US-B1- 6 668 178

## Description

### BACKGROUND OF THE INVENTION

### Field of the Invention

The invention relates in general to a communication device, and more particularly to a power module with wireless management function and a wireless communication device using the same.

### Description of the Related Art

In various cordless communication standards, for example, Zigbee, Z-wave, WiFi, Bluetooth and DECT (Digital enhanced cordless telecommunication), a wireless communication gateway is provided for emitting information bursts in specific radio channels with predetermined power levels. Cordless Advanced Technology-Internet and quality (CAT-iq) standard is the evolution of the DECT standard, which is specified to bring together broadband Internet and telephony. DECT ultra low energy (ULE) standard is intended to develop as part of CAT-iq standard. Digital enhanced cordless telecommunication (DECT) standard is a local area network (LAN) technology designed for the application of wireless low power consumption within a short range. The DECT has the advantages of being free of interference in telecommunication, having long distance telecommunication, speech intelligibility, plug and Play installation, and supporting the transmission of voice, data and images. Also, the wireless communication gateway conforming to the DECT ULE standard incurs very low power consumption.

Normally, the wireless communication gateway conforming to the DECT ULE standard uses a power converter for connecting an external AC power, and further converting an external AC power into a usable DC power. However, once the power converter fails or the external AC power interrupts, the DC power will be lost. Meanwhile, if an external back-up battery is available for providing a DC power, the wireless communication gateway will be able to operate for a period of time. However, once the capacity of the external battery begins to run low, power supply may be interrupted at any time. Prior art example are disclosed by US6668178 and WO02/073769.

### SUMMARY OF THE INVENTION

The invention is directed to a power module with wireless management function as in claim 1.

The invention is directed to a wireless communication device, as in claim 8.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 shows a circuit block diagram of a power module with wireless management function according to an embodiment of the invention;
FIG. 2 shows a circuit block diagram of a wireless communication device using the power module of FIG. 1;
FIG. 3 shows an operation flowchart of a control and management circuit according to an embodiment of the invention; and
FIG. 4 shows detailed procedures of the power management step of FIG. 3.

### DETAILED DESCRIPTION OF THE INVENTION

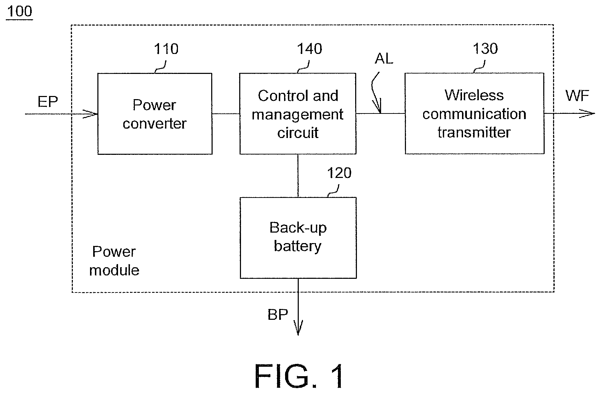

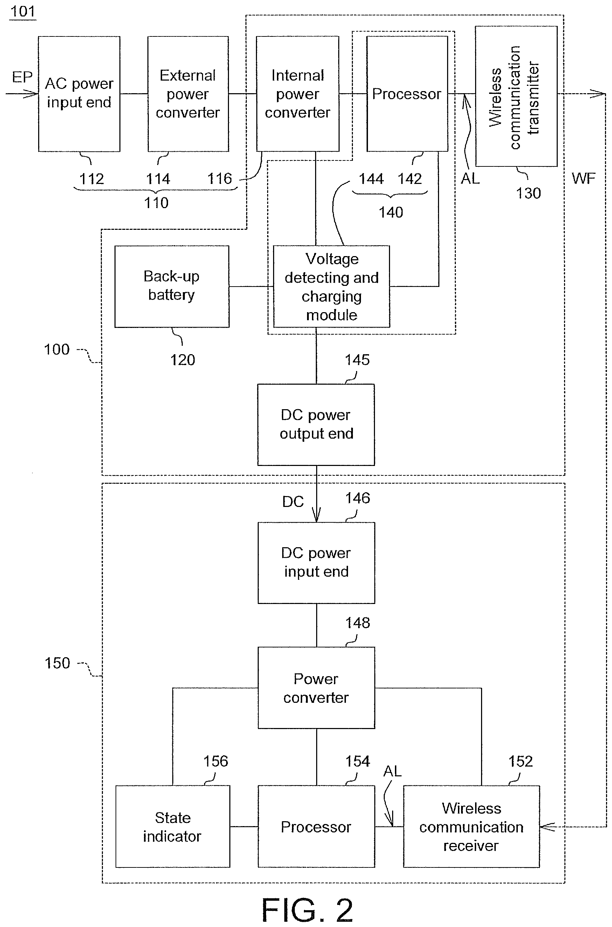

Referring to FIGS. 1 and 2. FIG. 1 shows a circuit block diagram of a power module 100 with wireless management function according to an embodiment of the invention. FIG. 2 shows a circuit block diagram of a wireless communication device 101 using the power module of FIG. 1.

As indicated in FIG. 1, the power module 100 with wireless management function may be realized by an uninterruptible power supply module comprising a power converter 110, a back-up battery 120, a wireless communication transmitter 130 and a control and management circuit 140.

The power converter 110 receives and converts an external power EP, such as 110V∼240V AC power used in households or offices, into at least one operating voltage, such as 5V∼24V DC voltage used in a small electronic device. The power converter 110 may be built in the power module 100. In another implementation, the power converter 110 and its power plug (not illustrated) may be separated of the power module 100.

Details of the power converter 110 are illustrated in the example of FIG. 2. In an embodiment, the power converter 110 may comprise an AC power input end 112 (such as power plug), an external power converter 114 and an internal power converter 116. The external power converter 114, disposed outside the housing of the power module 100, converts an AC power into a DC power with rated voltage. The internal power converter 116, disposed inside the housing of the power module 100, converts the DC power with rated voltage into different DC powers with different operating voltage, such as between 5V∼24V, for the use of different internal electronic elements.

In the present embodiment, the internal power converter 116 generates respective operating voltages for the internal elements such as the processor 142, the voltage detecting and charging module 144 and the wireless communication transmitter 130 illustrated in FIG. 2, such that the internal elements can be operated normally.

The back-up battery 120 may be realized by replaceable or chargeable battery such as carbon-zinc battery, alkaline battery, lithium battery and other types of battery. When the external power EP interrupts or the power converter 110 fails, the back-up battery 120 provides a back-up power BP to avoid the risk of power interruption.

The control and management circuit 140 respectively connecting with the power converter 110, the back-up battery 120 and the wireless communication transmitter 130 detects the states of the back-up battery 120 and the external power EP and further generates a power warning signal AL when the external power EP interrupts or the power converter 110 fails.

Details of the control and management circuit 140 are illustrated in the example of FIG. 2. In an embodiment, the control and management circuit 140 comprises a voltage detecting and charging module 144 and a processor 142. In an embodiment, the processor 142 is not necessary to be an additional component connecting to the voltage detecting and charging module 144. For example, the processor 142 may be replaced by the processor built in the wireless communication transmitter 130. The voltage detecting and charging module 144 connecting the back-up battery 120 detects the states of the capacity of the back-up battery 120 and charging state. When the capacity of the back-up battery 120 begins to run low, the voltage detecting and charging module 144 may emit a power insufficient signal to the processor 142. Conversely, when the capacity of the back-up battery 120 is sufficient or the charging is completed, the voltage detecting and charging module 144 may emit a capacity sufficient signal to the processor 142. Then, the processor 142 determines whether the voltage of the back-up battery 120 is normal according to the results of detection.

When the external power EP interrupts or the power converter 110 fails, the voltage detecting and charging module 144 may emit a power interrupt signal to the processor 142. Conversely, when the external power EP and the power converter 110 is normal, the voltage detecting and charging module 144 may also emit a power normal signal to the processor 142. Then, the processor 142 determines whether the external power EP is normal according to the results of detection.

The situations when the capacity of the back-up battery 120 begins to run low and/or the external power EP interrupts are disclosed below. As indicated in FIG. 2, the wireless communication transmitter 130 receives a power interrupt signal generated when the external power EP interrupts or the power converter 110 fails and/or a power insufficient signal generated when the capacity of the back-up battery 120 begins to run low, and further wirelessly transmits a power warning signal AL comprising the power interrupt signal and/or the power insufficient signal to the wireless communication module 150.

In an embodiment, the wireless communication transmitter 130 emits a radio wave WF conforming to one of Zigbee, Z-wave, WiFi, Bluetooth and digital enhanced cordless telecommunication (DECT) standards to the receiver 152 of the wireless communication module 150. The wireless communication receiver 152 has the same type as the wireless communication transmitter 130 (i.e. Zigbee, Z-wave, WiFi, DECT or Bluetooth). Preferably but not restrictively, the radio wave WF is conformed to DECT ULE standard, so that the power consumption is very low.

As indicated in FIG. 2, the wireless communication module 150 refers to various communication products, such as the communication devices having WiFi wireless transmission, supporting IEEE802.11a/b/g wireless network communication protocol, Bluetooth wireless communication long term evolution (LET) standard or worldwide interoperability for microwave access (WIMAX), and conforming to various standards or specification associated with electromagnetic interference testing. For example, the wireless communication module 150 is a wireless communication gateway, which needs another wireless module (not shown in FIG. 2) for WiFi, Bluetooth, LET or/and Wimax ect.

The wireless communication module 150 has a DC power input end 146, which receives a DC power DC outputted from the DC power output end 145 of the power module 100 or a back-up power BP provided by the back-up battery 120. In an embodiment, the back-up power BP is such as between 9∼24V, and the power of the back-up power BP is such as the same with that of the DC power DC provided by the power module 100. In addition, the power converter 148 converts a DC power with rated voltage into DC powers with different operating voltages, such as between 5V∼24V, for the use of different internal electronic elements. Moreover, the processor 154 processes the power warning signal AL transmitted to the wireless communication module 150, and controls the state indicator 156 to display the power warning signal AL by way of indicator lamps or other means to warn the user.

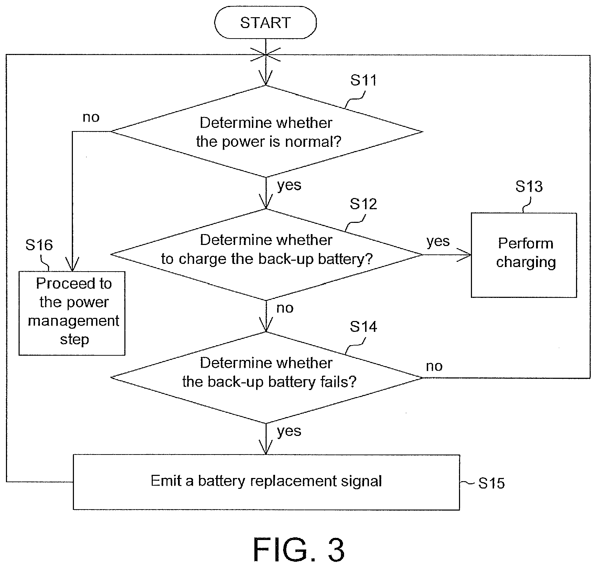

Referring to FIG. 3, an operation flowchart of a control and management circuit 140 according to an embodiment of the invention is shown. In the elaboration below, the components common to FIGS. 1 and 2 retain the same numeric designations. In step S11, whether the power is normal is determined. If the power is normal, then the process proceeds to step S12; otherwise, the process proceeds to step S16 being a power management step. In step S12, whether to charge the back-up battery 120 is determined. If the back-up battery 120 is to be charged, the process proceeds to step S13; otherwise, the process proceeds to step S14. In step S14, whether the back-up battery 120 fails is further determined. If the back-up battery 120 fails, the process proceeds to S15, a battery replacement signal is emitted to the wireless communication module 150 through a radio wave WF, and the state indicator 156 is used for displaying or indicating the battery replacement signal.

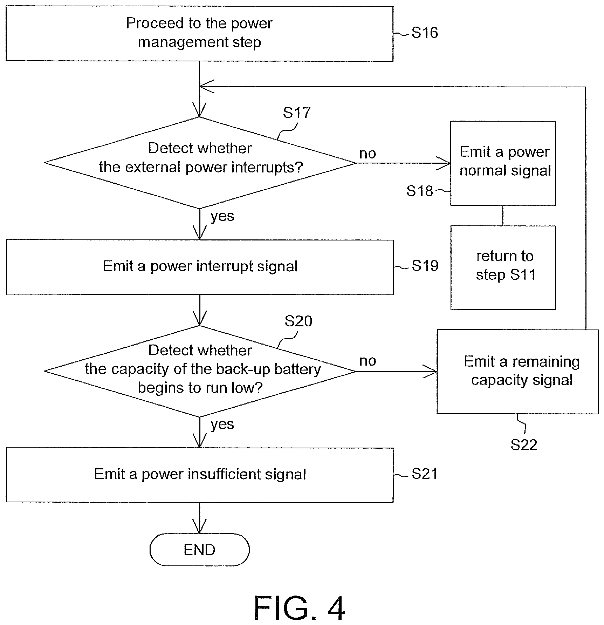

Referring to FIG. 4, detailed procedures of the power management step of FIG. 3 are shown. In the elaboration below, the components common to FIGS. 1 and 2 retain the same numeric designations. In step S17, whether the external power EP interrupts is detected. If the external power EP is normal, then the process proceeds to step S18, a power normal signal is emitted to the wireless communication module 150 through a radio wave WF, and the state indicator 156 is used for displaying or indicating the power normal signal. Then, the process returns to step S11. If the external power EP interrupts or the power converter 110 fails, then the process proceeds to step S19, a power interrupt signal is emitted to the wireless communication module 150 through a radio wave WF, and the state indicator 156 is used for displaying or indicating the power interrupt signal. In step S20, whether the capacity of the back-up battery 120 begins to run low is detected. If the capacity begins to run low, then the process proceeds to step S21, a power insufficient signal is emitted to the wireless communication module 150 through a radio wave WF, and the state indicator 156 is used for displaying or indicating the power insufficient signal. If the capacity of the battery is over a predetermined value, then the process proceeds to step S22, a remaining capacity signal is emitted to the wireless communication module 150 through a radio wave WF, and the state indicator 156 is used for displaying or indicating the remaining capacity signal.

While the invention has been described by way of example and in terms of the preferred embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A power module (100) with wireless management function, for powering a wireless communication gateway including a wireless communication receiver, the power module (100) comprising:
a power converter (110) for receiving and converting an external power into at least an operating voltage;
a back-up battery (120) for providing a back-up power to the wireless communication gateway when the external power interrupts or the power converter (110) fails;
a wireless communication transmitter (130) for wirelessly transmitting a power warning signal to the wireless communication gateway when the external power interrupts or the power converter (110) fails;
a control and management circuit (140) for connecting with the power converter (110), the back-up battery (120) and the wireless communication transmitter (130), wherein the control and management circuit (140) is configured to detect the states of the back-up battery (120) and the external power, and to generate the power warning signal when the external power interrupts or the power converter (110) fails; **characterized by** a DC power output end for outputting a DC power converted from the external power or outputting the back-up power to the wireless communication gateway, configured to power the wireless communication receiver of the wireless communication gateway so that the wireless communication gateway is capable of receiving the power warning signal provided from the power module.

2. The power module (100) according to claim 1, wherein the power converter (110) has an AC power input end for receiving the external power.

3. The power module (100) according to claim 1, wherein the wireless communication gateway has a DC power input end for receiving the DC power or the back-up power whose power is the same with that of the DC power.

4. The power module (100) according to claim 1, wherein the control and management circuit (140) comprises a voltage detecting and charging module connecting with the back-up battery (120) for detecting the capacity and the charging state of the back-up battery (120).

5. The power module (100) according to claim 4, wherein the control and management circuit (140) comprises a processor connecting with the wireless communication transmitter (130) and the voltage detecting and charging module and processing a power interrupt signal generated when the external power interrupts or the power converter (110) fails or processing a power insufficient signal generated when the back-up the capacity of the battery begins to run low.

6. The power module (100) according to claim 1, wherein the wireless communication transmitter (130) is configured to emit the power warning signal comprising a power interrupt signal and/or a power insufficient signal to the wireless communication gateway through a radio wave.

7. The power module (100) according to claim 6, wherein radio wave conforming to one of Zigbee, Z-wave, WiFi, Bluetooth and digital enhanced cordless communication, DECT, standards.

8. A wireless communication device, comprising:
a power module (100) with wireless management function according to claim 1;
a wireless communication gateway for connecting with the power module, wherein the power module (100) is conjured for emitting a power warning signal comprising a power interrupt signal and/or a power insufficient signal to the wireless communication gateway through a radio wave; and
wherein the wireless communication gateway comprises a wireless communication receiver for receiving the radio wave, and the wireless communication receiver is powered by the power module so that the wireless communication gateway is capable of receiving the power interrupt signal and/or the power insufficient signal from the power module.

9. The wireless communication device according to claim 8, wherein radio wave conforming to one of Zigbee, Z-wave, WiFi, Bluetooth and digital enhanced cordless communication, DECT, standards.

10. The wireless communication device according to claim 8, wherein the wireless communication gateway comprises at least a state indicator for displaying or indicating the power warning signal.

11. The wireless communication device according to claim 8, wherein the wireless communication gateway is conformed to DECT ultra low energy, ULE, standard or Zigbee.

## Patentansprüche

1. Strommodul (100) mit drahtloser Verwaltungsfunktion zur Energieversorgung eines Funkkommunikationsgateways, das einen Funkkommunikationsempfänger aufweist, wobei das Strommodul (100) aufweist:
einen Stromwandler (110) zum Empfangen und Umwandeln eines externen Stroms in mindestens eine Betriebsspannung;
einer Reservebatterie (120) zum Liefern eines Reservestroms an das Funkkommunikationsgateway, wenn der externe Strom unterbrochen ist oder der Stromwandler (110) ausfällt;
einen Funkkommunikationssender (130) zur drahtlosen Übertragung eines Stromwarnsignals an das Funkkommunikationsgateway, wenn der externe Strom unterbrochen ist oder der Stromwandler (110) ausfällt;
eine Steuer- und Verwaltungsschaltung (140) zur Verbindung mit dem Stromwandler (110), der Reservebatterie (120) und dem Funkkommunikationssender (130), wobei die Steuer- und Verwaltungsschaltung (140) dazu ausgebildet ist, die Zustände der Reservebatterie (120) und des externen Stroms zu erkennen und das Stromwarnsignal zu erzeugen, wenn der externe Strom unterbrochen ist oder der Stromwandler (110) ausfällt;
**gekennzeichnet durch**
ein Gleichstromausgangsende zum Ausgeben von aus dem externen Strom umgewandelten Gleichstrom oder zum Ausgeben des Reservestroms an das Funkkommunikationsgateway, das zur Energieversorgung des Funkkommunikationsempfängers des Funkkommunikationsgateways ausgebildet ist, so dass das Funkkommunikationsgateway, in der Lage ist, das von dem Strommodul erzeugte Stromwarnsignal zu empfangen.

2. Strommodul (100) nach Anspruch 1, bei welchem der Stromwandler (110) ein Wechselstromeingangsende zum Empfangen des externen Stroms aufweist.

3. Strommodul (100) nach Anspruch 1, bei welchem das Funkkommunikationsgateway ein Gleichstromeingangsende zum Empfangen des Gleichstroms oder des Reservestroms, dessen Energie gleich derjenigen des Gleichstroms ist, aufweist.

4. Strommodul (100) nach Anspruch 1, bei welchem die Steuer- und Verwaltungsschaltung (140) ein Spannungserkennungs- und -lademodul aufweist, das mit der Reservebatterie (120) verbunden ist, um die Kapazität und den Ladezustand der Reservebatterie (120) zu erkennen.

5. Strommodul (100) nach Anspruch 4, bei welchem die Steuer- und Verwaltungsschaltung (140) einen Prozessor aufweist, der mit dem Funkkommunikationssender (130) und dem Spannungserkennungs- und -lademodul verbunden ist und ein Stromunterbrechungssignal, das erzeugt wird, wenn der externe Strom unterbrochen ist oder der Stromwandler (110) ausfällt, verarbeitet oder ein unzureichenden Strom anzeigendes Signal verarbeitet, das erzeugt wird, wenn die Kapazität der Reservebatterie zu sinken beginnt.

6. Strommodul (100) nach Anspruch 1, bei welchem der Funkkommunikationssender (130) dazu ausgebildet ist, das Stromwarnsignal, welches ein Stromunterbrechungssignal und/oder das unzureichenden Strom anzeigende Signal aufweist, über eine Funkwelle an das Funkkommunikationsgateway zu emittieren.

7. Strommodul (100) nach Anspruch 6, bei welchem die Funkwelle einem der Standards Zigbee, Z-Wave, WiFi, Bluetooth und Digital Enhanced Cordless Telecommunication (DECT) entspricht.

8. Funkkommunikationsvorrichtung mit:
einem Strommodul (100) mit drahtloser Verwaltungsfunktion nach Anspruch 1;
einem mit dem Strommodul (100) verbundenen Funkkommunikationsgateway, wobei das Strommodul (100) dazu ausgebildet ist, ein Stromwarnsignal und/oder ein unzureichenden Strom anzeigendes Signal über eine Funkwelle an das Funkkommunikationsgateway zu emittieren; und
wobei das Funkkommunikationsgateway einen Funkkommunikationsempfänger zum Empfangen der Funkwelle aufweist, und der Funkkommunikationsempfänger von dem Strommodul mit Energie versorgt wird, so dass das Funkkommunikationsgateway in der Lage ist, das Stromwarnsignal und/oder das unzureichenden Strom anzeigende Signal von dem Strommodul zu empfangen.

9. Funkkommunikationsvorrichtung nach Anspruch 8, bei welcher die Funkwelle einem der Standards Zigbee, Z-Wave, WiFi, Bluetooth und Digital Enhanced Cordless Telecommunication (DECT) entspricht.

10. Funkkommunikationsvorrichtung nach Anspruch 8, bei welcher das Funkkommunikationsgateway mindestens einen Zustandsanzeiger zum Anzeigen oder Signalisieren des Stromwarnsignals aufweist.

11. Funkkommunikationsvorrichtung nach Anspruch 8, bei welcher das Funkkommunikationsgateway mit dem DECT Ultra Low Energy Standard, ULE, oder Zigbee konform ist.

## Revendications

1. Module d'alimentation (100) doté d'une fonction de gestion sans fil, pour alimenter une passerelle de communication sans fil incluant un récepteur de communication sans fil, le module d'alimentation (100) comprenant :
un convertisseur d'alimentation (110) pour recevoir et convertir une alimentation externe en au moins une tension de fonctionnement ;
une batterie de secours (120) pour fournir une alimentation de secours à la passerelle de communication sans fil lorsque l'alimentation externe s'interrompt ou le convertisseur d'alimentation (110) est défaillant ;
un émetteur de communication sans fil (130) pour transmettre sans fil un signal d'avertissement d'alimentation à la passerelle de communication sans fil lorsque l'alimentation externe s'interrompt ou le convertisseur d'alimentation (110) est défaillant ;
un circuit de commande et de gestion (140) pour se connecter au convertisseur d'alimentation (110), la batterie de secours (120) et l'émetteur de communication sans fil (130), dans lequel le circuit de commande et de gestion (140) est configuré pour détecter les états de la batterie de secours (120) et l'alimentation externe, et pour générer le signal d'avertissement d'alimentation lorsque l'alimentation externe s'interrompt ou le convertisseur d'alimentation (110) est défaillant ; **caractérisé par**
une extrémité de sortie d'alimentation en courant continu pour fournir en sortie une alimentation en courant continu convertie par l'alimentation externe ou fournir en sortie l'alimentation de secours à la passerelle de communication sans fil, configurée pour alimenter le récepteur de communication sans fil de la passerelle de communication sans fil de sorte que la passerelle de communication sans fil soit capable de recevoir le signal d'avertissement d'alimentation fourni depuis le module d'alimentation.

2. Module d'alimentation (100) selon la revendication 1, dans lequel le convertisseur d'alimentation (110) a une extrémité d'entrée d'alimentation en courant alternatif pour recevoir l'alimentation externe.

3. Module d'alimentation (100) selon la revendication 1, dans lequel la passerelle de communication sans fil a une extrémité d'entrée d'alimentation en courant continu pour recevoir l'alimentation en courant continu ou l'alimentation de secours dont la puissance est la même que celle de l'alimentation en courant continu.

4. Module d'alimentation (100) selon la revendication 1, dans lequel le circuit de commande et de gestion (140) comprend un module de charge et de détection de tension se connectant à la batterie de secours (120) pour détecter la capacité et l'état de charge de la batterie de secours (120).

5. Module d'alimentation (100) selon la revendication 4, dans lequel le circuit de commande et de gestion (140) comprend un processeur se connectant à l'émetteur de communication sans fil (130) et au module de charge et de détection de tension et traitant un signal d'interruption d'alimentation généré lorsque l'alimentation externe s'interrompt ou le convertisseur d'alimentation (110) est défaillant ou traitant un signal d'alimentation insuffisante généré lorsque la capacité de secours de la batterie commence à s'épuiser.

6. Module d'alimentation (100) selon la revendication 1, dans lequel l'émetteur de communication sans fil (130) est configuré pour émettre le signal d'avertissement d'alimentation comprenant un signal d'interruption d'alimentation et/ou un signal d'alimentation insuffisante à la passerelle de communication sans fil par le biais d'une onde radio.

7. Module d'alimentation (100) selon la revendication 6, dans lequel l'onde radio est conforme à l'une des normes Zigbee, Z-Wave, Wi-Fi, Bluetooth et de communication numérique sans fil améliorée, DECT.

8. Dispositif de communication sans fil, comprenant :
un module d'alimentation (100) doté d'une fonction de gestion sans fil selon la revendication 1 ;
une passerelle de communication sans fil pour se connecter au module d'alimentation,
dans lequel le module d'alimentation (100) est configuré pour émettre un signal d'avertissement d'alimentation comprenant un signal d'interruption d'alimentation et/ou un signal d'alimentation insuffisante à la passerelle de communication sans fil par le biais d'une onde radio ; et
dans lequel la passerelle de communication sans fil comprend un récepteur de communication sans fil pour recevoir l'onde radio, et le récepteur de communication sans fil est alimenté par le module d'alimentation de sorte que la passerelle de communication sans fil soit capable de recevoir le signal d'interruption d'alimentation et/ou le signal d'alimentation insuffisante en provenance du module d'alimentation.

9. Dispositif de communication sans fil selon la revendication 8, dans lequel l'onde radio est conforme à l'une des normes Zigbee, Z-Wave, Wi-Fi, Bluetooth et de communication numérique sans fil améliorée, DECT.

10. Dispositif de communication sans fil selon la revendication 8, dans lequel la passerelle de communication sans fil comprend au moins un indicateur d'état pour afficher ou indiquer le signal d'avertissement d'alimentation.

11. Dispositif de communication sans fil selon la revendication 8, dans lequel la passerelle de communication sans fil est conforme à la norme DECT à consommation énergétique ultrafaible, ULE, ou Zigbee.
